# EUROPEAN PATENT SPECIFICATION

(11) **EP 3 987 989 B1**
(45) Date of publication and mention of the grant of the patent: **05.03.2025**
(21) Application number: 21212743.5
(22) Date of filing: 19.10.2018
(51) Int. Cl.: A47J 31/52, A47J 31/36, A47J 31/46

(54) **MACHINE AND PROCESS FOR PREPARING A BEVERAGE**
MASCHINE UND VERFAHREN ZUR ZUBEREITUNG EINES GETRÄNKS
MACHINE ET PROCÉDÉ POUR LA PRÉPARATION D'UNE BOISSON

(30) Priority: 20.10.2017 IT 201700119345; 22.05.2018 IT 201800005595
(43) Date of publication of application: 27.04.2022
(62) Divisional of application: 18804391.3
(73) Proprietor: CMA Macchine per caffè S.r.l., 31058 Susegana (TV) (IT)
(72) Inventor: CEOTTO, Beppino, deceased (IT); ZONELLI, Andrea, 31058 Susegana (TV) (IT)
(74) Representative: Cammareri, Emanuele

(56) References cited:
- EP-A1- 2 127 570
- WO-A1-2014/028844
- US-A- 3 314 357
- US-A1- 2015 064 323
- US-A1- 2016 287 004

## Description

### Field of the Invention

The present invention concerns a machine and process for preparing a beverage, in particular coffee, by infusion. In particular, the present invention concerns a machine for preparing coffee for professional use, such as, for example, in restaurants, bars, hotels and the like.

In the present application, the term "infusion" refers to a machine that allows a beverage to be produced, and in particular coffee, by means of the passage of water, preferably hot and pressurized, through at least one powder ingredient, in particular coffee, which is contained in an infusion unit. The infusion unit comprises an infusion chamber, wherein the powdered coffee, or other ingredient, is arranged, an inlet conduit for the hot water, an outlet conduit for the beverage and a filter for restraining the ingredient in the infusion chamber.

These machines further comprise a hydraulic circuit connecting a water supply, generally deriving from the water supply network, at least one pump, at least one boiler for heating the water and generating steam and means for controlling the water supply to the infusion chamber. In particular, according to the present invention, the machine is of the type comprising a control unit, which, together with sensors and valves, is part of a system adapted to regulate, and in particular to set, the water flow rate through the ingredient in the infusion chamber.

### Known prior art

In the known art, there are infusion machines for preparing and delivering beverages by controlling the water flow through the infusion chamber. Generally, known machines try to solve the water flow control problem in the infusion step by means of solutions wherein the control unit of the machine fully manages the flow in an automatic way. In essence, this control is obtained by measuring the values of the flow rate and/or pressure of the water entering the infusion chamber and by changing these values so that their profiles follow a predetermined profile stored in the control unit.

An example of this system is described in EP2314182, in the name of Gruppo Cimbali and which describes a coffee machine comprising a water pressure regulation system having a pressure sensor arranged on the hydraulic circuit and which puts a pump in communication with the infusion assembly. The sensor is arranged between the heating chamber and the delivery conduit of the infusion chamber. The hydraulic pump is electronically operated by a control unit so that to regulate the outgoing water flow depending on the delivery pressure value measured. EP2314183, also in the name of Gruppo Cimbali, is relative to the flow control based on the pressure measurements of the circuit; the regulation occurs by acting on a hydraulic variable-flow valve, which is controlled to change the flow at the outlet of the valve itself. In both cases, the control is automatic and carried out by the machine.

EP2490580, in the name of La Marzocco, describes a machine comprising one or more operative units characterized by the presence of a system to control and regulate the parameters of the infusion. The operative units further have a variable-speed pump and manual changing means to change the water pressure during the infusion, and in particular a rheostat controlled by a manually operable lever. The rheostat controls the operations of a variable-speed pump. The same teaching is described in the online publication available at *http:*//*www.home-barista.com*/*espresso-machines*/*pressure-profiling-with-fluid-o-tech-tmfr-pump-or-wholesale-copying-greg-scaces-ideas-t12179.html,* published on the website Home-barista.com on 10/13/2009.

The document Simac - Castelli US4858522 describes a rheostat connected to a user-operable handle, which allows to control the quantity of coffee to be dispensed by controlling the duration of the delivery.

US9364117 and US9433318, in the name of Seattle Espresso Machine, describe a system, a method and a device for producing coffee with a water flow regulation. The method provides a pre-infusion step, wherein the coffee powder is slowly wet with a first volume of hot and pressurized water delivered at the first flow rate value. This is followed by a coffee extracting step at a greater flow rate value than for the pre-infusion step. Different valves and paths, through which the water flows, are provided to regulate the flow. The barista can therefore regulate the pressure, volume and water flow by acting on at least one valve. In particular, a brew handle is provided on the machine and can be used to operate at least three different delivery modes: the OFF setting (flow rate equal to zero), a first flow rate value for the pre-infusion step and a second flow rate value for the extraction step. In these patents, the flow is changed by using a variable number of conduits for the supply of water to the infusion chamber. US 2015/064323 A1 discloses a further beverage machine.

As mentioned above, the water supplied to the infusion chamber is linked to predetermined pressure and flow rate profiles and values in the known control systems. A similar control has the main defect of being a typical "Dumb A.I." (Dumb Artificial Intelligence) form of control, wherein the machine is linked to a non-variable program which follows a pressure profile independently from the result that this action has on the delivery of the beverage. For example, by following a predetermined pressure profile, the desired flow profile may not be obtained in certain conditions, and vice-versa. This fact often involves the failure to correct the problems encountered during the delivery of the beverage.

Another problem of the known machines is linked to the complexity of the control system, which translates into system rigidity and high machine cost.

Object of the present invention is to solve the aforesaid problems and to provide a simple-to-obtain and maintain machine and a method for delivering a beverage. Another object of the invention is to obtain a machine and method allowing to flexibly and intelligently control the infusion step and, in particular, to adapt the flow rate to the specific delivery conditions, if necessary, during the delivery of the beverage.

### Summary of the invention

These and other objects are achieved by the machine and method according to the respective independent claims. Further features/aspects of the invention are reported in the dependent claims. Moreover, it should be initially noted that, according to the invention, what is described and/or claimed herein with reference to the machine can be applied to the method, and vice-versa.

According to the present invention, the machine for preparing, through percolation, a beverage, in particular coffee, comprises a pressurized water supply, a water heating boiler, an infusion unit comprising an infusion chamber, a hydraulic circuit fluidically connecting said pressurized water supply to said boiler and said infusion unit; a control unit adapted to control the delivery of the beverage from said infusion chamber. The machine is characterized by further comprising a variable-flow valve and means for driving said valve, said valve being positioned on said hydraulic conduit, upstream of the infusion chamber; the valve driving means comprising a manually operable device.

The term "variable-flow valve" intends to define any hydraulic valve with a variable-flow rate control, i.e. a valve able to change the flow rate of the water crossing said valve at a range of values between the closed valve (0% flow) and the completely open valve (100% flow). Preferably, the valve is an electrovalve. Suitable valves are, for example, proportional electrovalves with which, by changing the electric signal, the fluid flow rate crossing the valve can be regulated between 0% and 100% of the maximum nominal flow. Different types and/or shapes of the valve, and in particular of the cut-off adapted to cause the modification of the water passage section, can be used. For example, a needle valve can be used. The valve can also be operated by known means, for example according to a possible embodiment, a stepper motor can be used.

The variable-flow valve is arranged upstream of the infusion chamber. In an embodiment, the valve is a proportional electrovalve positioned between a pump and a boiler. In another embodiment, said valve is arranged between the boiler and the infusion chamber.

The term "manually operable device" refers to any device that can be directly operated by the barista, or other user. In other words, this term indicates that the control on the valve regulating the water flow rate is carried out manually and not automatically, as in the prior known art. In other words, according to an aspect of the invention, the valve is controlled by the device, which is manually operated by the user, rather than through a control logic, and in particular through a feedback control. In a preferred embodiment of the invention a lever, which is mounted on a support and which is movable to rotate in a direction for opening the valve and in the opposite direction for closing the valve, is used. According to the invention, other devices can be manually operated and used, such as, for example, throttles, joysticks and similar rotatably or linearly movable devices. According to the invention, manually operable devices comprise the images visible on touch devices, such as on a touchscreen or touchpad, and similar devices adapted to display an indicator of the opening degree of the variable-flow valve; the image visualized can be translated or changed by the operator on the display, whether manually or not, so that to be able to take different "positions" on the screen. In other words, the opening degree of the valve can be changed by sliding a finger across the surface of the touchpad, for example to slide the image across the screen. The touch devices that can be used for this purpose are known in the known art.

The infusion chamber is generally formed by a portion of the infusion unit, which delivers water and is arranged on the machine in combination with a filter holder, which, when in use, contains the coffee or other ingredient and which is mounted on the water delivery portion. In an embodiment, the infusion chamber comprises a capsule. In an embodiment, the infusion chamber comprises a cylinder inside which at least one piston is movable; this implementation can be used in a so-called vending or HoReCa machine.

According to an aspect of the invention, the machine further comprises at least one flow rate sensor and/or at least one pressure sensor that are adapted for detecting, and therefore measuring, at least one flow rate and/or pressure value. According to an aspect of the invention, the at least one flow rate sensor and/or at least one pressure sensor are therefore adapted to generate a flow rate and/or pressure measurement signal indicative of the flow rate and/or pressure value detected. In other words, according to an aspect of the invention, at least one flow rate sensor and/or at least one pressure sensor detect a flow rate and/or pressure value inside the hydraulic circuit of the machine, thus generating a flow rate and/or pressure measurement signal. Preferably, the sensors are mounted on a conduit of the hydraulic circuit and are more preferably positioned between said water supply and said boiler. Said sensor or sensors are connected to the control unit.

According to an embodiment of the invention, said measurement signal or signals, generated during the delivery of the beverage, can be visible on a screen, or display, preferably in the form of a graphic or profile of the flow rate and/or pressure of a beverage delivery. It should be noted that the signals relative to the pressure value can be used to generate any alarm signal if the pressure value exceeds a safety threshold.

According to an embodiment of the invention, said manually operated means of the flow - regulation valve are combined with a device adapted to detect the position taken by said means with respect to a plurality of possible positions along a path, and to send a signal indicative of the detected position to the aforesaid control unit. The control unit is connected to the variable-flow valve and operates said valve depending on the position detected for the manually operated device.

Preferably, said position detecting device is a potentiometer or rheostat connected to said control unit. In a preferred embodiment, the manually operated means comprise a rotatable lever combined with a potentiometer, for example a circular potentiometer, however, other embodiments of the potentiometer are not to be excluded. As mentioned above, circular or linear potentiometers or rheostats can be used, as well as soft potentiometers and potentiometers of the touch type, with which the pressure can be exerted through the finger of a user (i.e. the barista).

According to an aspect of the invention, the machine comprises a storage unit to store the flow rate and/or pressure profiles detected by the aforesaid sensors during the delivery of the beverage. Preferably, the aforesaid control unit is adapted to process a plurality of profiles for displaying an average delivery profile.

According to a further aspect of the invention, said machine comprises a storage unit where the positions of the manual device detected by the potentiometer during the delivery of the beverage are stored. Preferably, the aforesaid control unit is adapted to process a plurality of profiles, relative to the positions of the lever during the individual deliveries, for displaying an average position profile, which can be used as a potential reference, for example during a delivery.

According to an aspect of the invention, the control unit is adapted to store the voltage values provided to the valve (which is preferably a servovalve or an electrovalve) depending on the position taken by the lever during the delivery of the beverage. The control unit can therefore process a plurality of profiles, relative to the positions of the valve during the single deliveries, for displaying an average position profile which can be used as a possible reference, for example during a delivery.

The invention further concerns a method for delivering a beverage from a machine having at least some of the aforesaid features, the method comprising the steps of supplying water to an infusion assembly comprising an infusion chamber containing at least one ingredient for producing said beverage; delivering the beverage from the infusion chamber; the method comprising the control of the water flow supplied to said infusion chamber by means of a variable-flow valve, for example characterized by controlling the opening degree of said variable-flow valve with at least one manually operable device to change the flow rate of the beverage during the delivering step.

According to an aspect of the invention, the position of the manual device directly or indirectly corresponds to a water flow rate through the variable-flow valve; the flow rate through the valve changes when the position of the manual device is changed. Preferably, the connection between the position of the manual device and flow rate is indirect. In an embodiment, the machine provides information on the water flow rate by means of a display; in another embodiment, or in addition to the preceding one, the flow information can be acquired visibly by observing the beverage delivered.

According to an aspect of the invention, the manual device is a lever combined with a potentiometer or rheostat. The method provides for detecting the position of the lever by means of the potentiometer or rheostat and for communicating said position to the control unit; the control unit is connected to the variable-flow valve and operates said valve depending on the position detected of the lever. The lever is moved in a direction or in the opposite direction, generally in a continuous way; an opening degree of the variable-flow valve corresponds to each position taken by the lever: the control unit detects the positions of the lever and consequently changes the opening of the valve.

According to the invention, the manually operable device is a digital, or "virtual," device. In particular, the device is an icon, or image, which indicates the opening degree of the valve: the image is visible on a device including a touchscreen; in this embodiment, the method provides for manually changing, with at least one finger or capacitive pencil, the position of the image/indicator and for operating the valve depending on the position of said indicator on the display.

According to an aspect of the invention, the method comprises the step of detecting (and therefore measuring) the flow rate and/or pressure values in the hydraulic circuit during the delivery and of visualizing such values on a display during the delivery, preferably in the form of pressure and/or flow rate profiles, which are generated during the delivery. It should be noted that this aspect of the method of the present invention is different than the prior known art discussed above, which teaches to construct a pressure or flow rate profile before delivering the beverage and to automatically change the pressure or flow detected during the delivery in order to follow a predetermined profile.

According to an aspect of the invention, the display shows both the image (i.e. the indicator) forming the manually operable device and at least one of the aforesaid flow rate or pressure values. This can facilitate the control of the variable-flow valve for the barista.

The invention has numerous advantages. In particular, the machine and method allow the delivery of the beverage without being constrained to the fixed parameters, which are obligatorily followed by the machines of the known art. This way, the beverage delivered can be customized and improved. Moreover, the machine is reliable and easy to manage for the user-barista.

### Brief description of the drawings

These and other advantages of the present invention will become clearer in the following description and accompanying drawings, provided by way of example and without limitations and in which:
Figure 1 schematically shows a possible embodiment of the machine according to the invention;
Figure 2 schematically shows a further possible and alternative embodiment of the machine for preparing a beverage, according to the invention and wherein by-pass conduits are present;
Figure 3 schematically shows a further possible and alternative embodiment of the machine for preparing a beverage, according to the invention and wherein a pump supplying water to the delivering assemblies of the machine is present, wherein each delivering assembly is provided with its own valve for controlling the flow rate.

### Method for implementing the invention

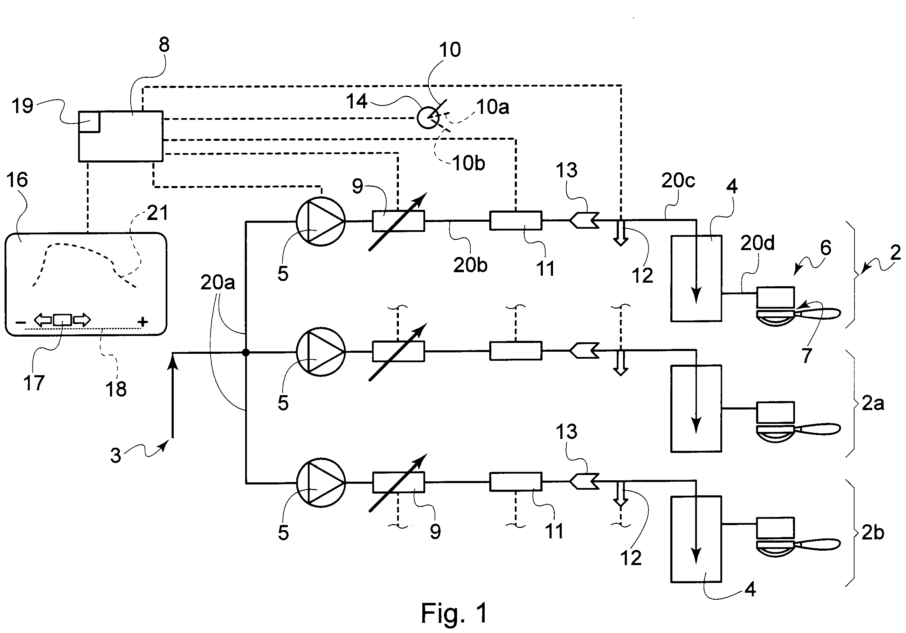

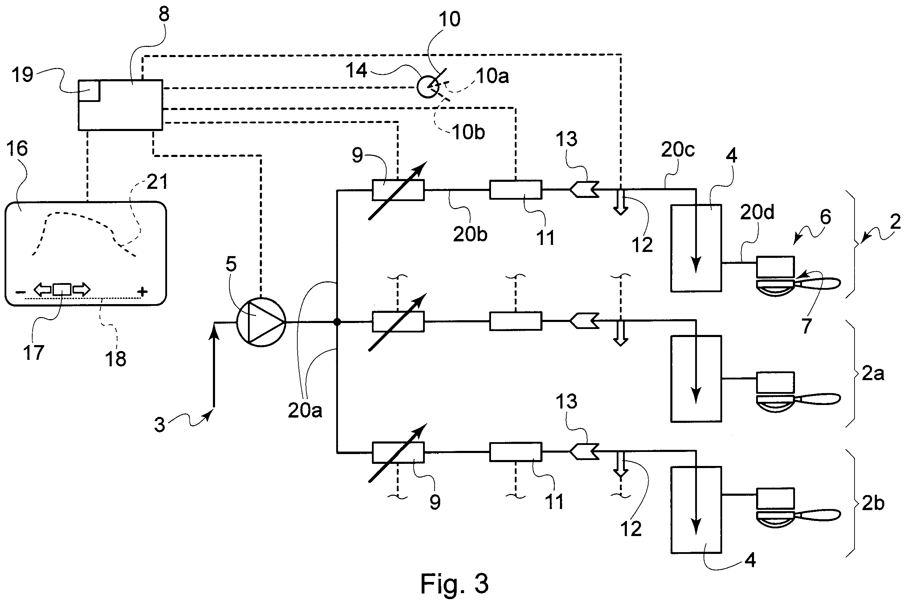

With reference to figure 1, a machine comprising three beverage delivering assemblies 2, 2a, 2b is shown. In the embodiment shown, each assembly 2-2b is provided with its own pump 5; it should be noted that a single pump supplying pressurized water to the three delivering assemblies can also be present, such as, for example, shown in the possible embodiment of figure 3. The following description will refer to one of the three delivering assemblies, although the description is also applicable to the similar assemblies present in the machine.

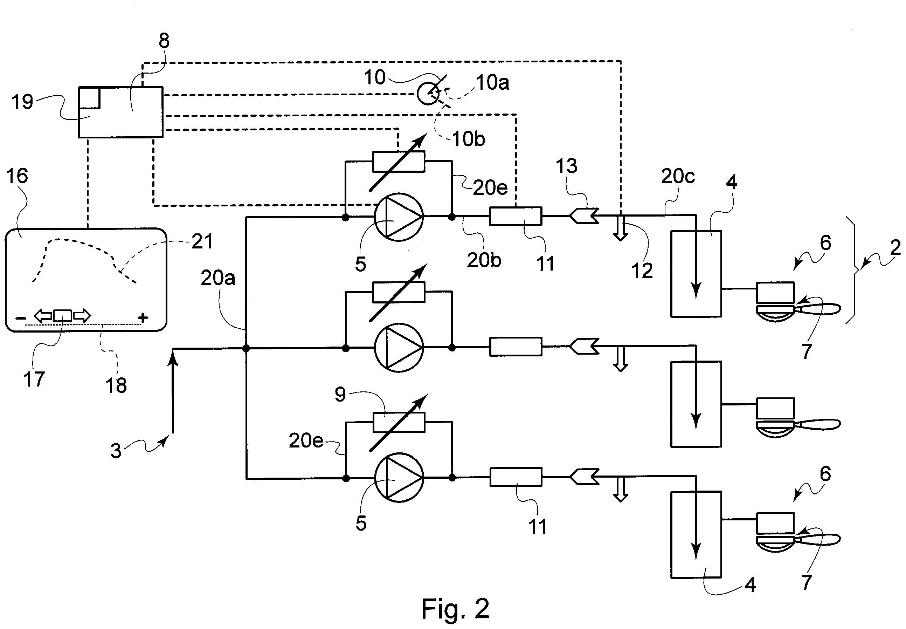

The machine 1 of the invention comprises a water supply 3 connected to the pump 5 for supplying pressurized water to a hydraulic circuit 20a-20c in the figures 1 and 3 (20a-20e in figure 2). The machine further comprises at least one boiler 4 for heating the water, at least one infusion unit 6 comprising an infusion chamber 7. The hydraulic circuit fluidically connects the pump 5 to the boiler 4 and infusion unit 6. The machine further comprises a control unit 8 adapted for controlling the delivery of the beverage from the infusion chamber. This control occurs, at least in part, by means of the variable-flow valve 9 positioned on the hydraulic circuit, upstream of the infusion chamber 7; the valve 9 is directly or, preferably, indirectly driven by means comprising a manually operable device depicted with the reference 10 in the figures.

The variable-flow valve 9 is preferably a proportional electrovalve connected to the control unit 8. The machine preferably also comprises at least one among a flow rate sensor 11 or a pressure sensor 12, which are preferably arranged between the pump 5 and the boiler 4. A non-return valve 13 can also be present in this section of the circuit.

The manually operable device 10, which is used to drive the proportional valve 9, is combined with a further device 14, which is adapted to detect the position of the manually operable device with respect to a path, and to send a signal indicative of the detected position for the device 10 to the aforesaid control unit. Depending on the signal indicative of the position of the device 10, the valve 9 is driven to change the flow rate of water crossing it.

In the possible embodiment shown in figure 1, the manually operable device 10 comprises a lever rotatable between a plurality of positions, preferably in a continuous way; in this embodiment, the device 14 for detecting the position of the lever comprises a potentiometer, or rheostat, combined with the lever and connected to the control unit 8. In this embodiment, the lever moves and changes the value detected by the potentiometer 14, a value that is connected with a position of a plurality of positions schematically depicted with the references 10, 10a and 10b, of the lever and which is read by the control unit 8. The valve 9 is driven by the unit 8 to change the water flow rate crossing it, depending on the value read by the potentiometer 14, i.e. depending on the positions 10-10b that the lever has taken depending on the selection of the barista acting on the lever.

The machine according to the invention preferably provides a display 16 connected to the control unit 8. As mentioned above, the flow sensor and the pressure sensor (if the latter is present) are connected to the control unit 8 and are adapted to respectively generate a flow rate and pressure measurement signal read by the unit 8. The signals generated and read are representative of the flow rate and pressure during the delivery of the beverage. These values can be visualized on a display 16 in the form of a plot or profile 21. It should be noted that, according to an aspect of the present invention, the flow rate and/or pressure values are not used by the control unit 8 to carry out a feedback control, since, as mentioned, the valve 9 is controlled depending on the position of the manually operable device, for example the lever 10, which is, for example, manually operated by the user.

In addition to the use of a physical device, such as the aforesaid lever, the invention provides for the use of a manually operated device of the digital or virtual type for driving the valve 9. Figures 1 and 2 show an embodiment comprising a physical manual device (the lever 10 combined with the rheostat 14) and a digital manual device depicted with reference 17 on the display 16. In this embodiment, the manually operated device is an image, or icon, 17 that serves as a valve drive indicator and that can be visualized on a touch device, for example a touchscreen. The valve 9 is operated by changing the position of said indicator 17 along a path 18 on the touch device. In figure 1, the entire display 16 is a touch device, but the display can be separated from the touchscreen.

In an embodiment, the machine comprises a storage unit 19 to store at least one plurality of data selected among: the positions of said manually operable device, 10 or 17, the pressure values in the hydraulic circuit, the flow rate values in the hydraulic circuit. If desirable, the control unit is programmable to generate and store at least one profile of said positions of the manual device 10 or 17; the profiles generated can be visualized on the display 16 before, during and after the delivery of a beverage. The pressure and/or flow rate profiles can also be generated, stored and eventually displayed on the display 16.

Figure 2 shows a variant of the embodiment in figure 1, with the difference that the valve 9 is positioned on a by-pass conduit 20e leaving from a portion 20b of the hydraulic circuit, downstream of the pump 5 (with respect to the water flow direction), and which meets to the portion 20a of the hydraulic circuit upstream of the pump 5.

Figure 3 shows a further possible embodiment of the present invention, wherein the machine is provided with a single pump 5 supplying the hydraulic circuits bringing water to a respective infusion chamber. A valve 9 is provided downstream of the pump 5 and arranged in a row on each hydraulic circuit bringing water from the single pump 5 to each infusion chamber. Also in this embodiment, the position of the device 10 allows to drive each valve 9 by changing the water flow rate crossing it. For example, the value of the position of the device 10 is appropriately converted into a signal which is sent, for example by the control unit 8, to the valve 9, which consequently changes the water flow rate crossing it.

The operations of the aforesaid machine according to the method of the invention for controlling the delivery of a beverage provides for controlling, and therefore for setting the water flow rate supplying the infusion chamber, by means of the variable-flow valve 9 and for controlling the opening degree of the variable-flow valve 9 with at least one device, 10 or 17, manually operable by the barista or by a generic user, for example to change the flow rate of the beverage during the beverage delivering step, i.e. the flow can be changed during the delivery of the beverage.

During the delivery, at least one position of the device manually operable by the barista is detected and the control unit, which is connected to the variable-flow valve 9, regulates the opening or closing degree of the valve depending on the position detected of the manual device. This way, the barista controls the water flow rate during the production of the beverage, e.g. a coffee, and can change the infusion conditions and therefore the type and quality of the beverage by moving the lever 10 or image 17 or equivalent device manually, in case continuously.

As seen above, the method can comprise the steps of detecting a plurality of positions taken by the device operated by the barista (lever, image on the touchscreen or other) during the delivery of a beverage, storing these positions and optionally generating one or more position profiles. This allows the barista to recognize the best positions, i.e. best profiles, depending on the quality assessment of the beverage delivered from time to time. The barista can therefore learn from the experience and deliveries carried out to improve the next deliveries. Naturally, data acquired from the control unit can be recalled and processed.

Moreover, the method provides the possibility to detect, during delivery, the pressure and/or flow rate values in the hydraulic circuit and to generate a plurality of pressure and/or flow rate profiles indicative of the respective values during delivery. In other words, the flow rate and/or pressure performance of a delivery during the delivery itself can be visualized on the display, practically in real time. As mentioned, the profiles or values detected are not preferably used by the control unit for controlling the water flow through the valve 9.

In a possible embodiment, the display is of the touch type or comprises a touchscreen part, the valve is a proportional valve, the device manually operable by the barista is a lever combined with a rheostat, the display shows the water flow rate and/or pressure values.

A further object of the invention is a storage device adapted to be read by a computer and/or control unit, said device comprising instructions that, once they have been read by a control unit of a machine according to one of claims 1 to 6, make the machine carry out the steps of a method according to one of claims 7 to 13.

## Claims

1. Machine (1) for preparing a beverage, comprising a pressurized (5) water supply (3), a boiler (4) for heating the water, an infusion unit (6) comprising an infusion chamber (7), a hydraulic circuit (20a - 20e) fluidically connecting said pressurized water supply with said boiler and said infusion unit; a control unit (8) adapted to control the delivery of the beverage from said infusion chamber, **characterized by** further comprising a variable-flow valve (9) and valve driving means to drive said valve, said valve being positioned on said hydraulic circuit upstream of the infusion chamber (7), said valve driving means comprising a manually operable device (10, 17), wherein said manually operable device (10, 17) is combined with a device (14, 16) adapted to detect the position of the manually operable device with respect to a path (14, 18) and to send a signal indicative of the detected position to said control unit (8), **characterized in that** said manually
operated device is an image (17) visible on a touch device (16) and said valve (9) is operated by changing the position of said image (17) on the device (16).

2. Machine according to claim 1, wherein the position of said valve (9) is selected between said boiler (4) and said infusion chamber (7) or between a pump (5) and said boiler (4).

3. Machine according to claim 1 or 2, wherein said valve (9) is a proportional electrovalve.

4. Machine according to one of the preceding claims, wherein said manually operable device comprises a lever (10) and said device detecting the lever position comprises a potentiometer (14) combined with said lever.

5. Machine according to one of the preceding claims, further comprising at least one flow rate sensor (11) and/or at least one pressure sensor (12), which are adapted to detect a flow rate and/or pressure value.

6. Machine according to one of the preceding claims, comprising a storage unit (19) to store at least one plurality of data selected among: the positions of said manually operable device (10, 17), the values of pressure in the hydraulic circuit, the values of flow rate in the hydraulic circuit, or a combination thereof, preferably said control unit (8) is programmable to generate at least one profile (21) of said positions and comprises a display for displaying said profile(s).

7. Method for controlling the delivery of a beverage in a machine (1) according to one of the preceding claims 1 - 6, comprising a pressurized water supply (3, 5) a boiler (4) for heating the water, an infusion chamber (7), a hydraulic circuit (20a - 20e) fluidically connecting said pressurized water supply, said boiler and said infusion unit; a control unit (8) adapted to control the delivery of the beverage from said infusion chamber (7), a variable-flow valve (9) and valve driving means to drive said valve, said valve being positioned on said hydraulic conduit upstream of the infusion chamber (7), said valve driving means comprising a manually operable device (10, 17), the method comprising controlling the water supplied to said infusion chamber (7) by a variable-flow valve (9), **characterized by** controlling the opening degree of said variable-flow valve (9) through at least one manually operable device (10, 17) in order to change the beverage flow rate in the delivering step.

8. Method according to claim 7, comprising the step of detecting a position of said manually operated device (10, 17) and wherein said control unit (8) is connected to the variable-flow valve (9) and operates said valve depending on the detected position of said device (10, 17).

9. Method according to claim 7 or 8, comprising the steps of detecting a plurality of positions (10, 10a) taken by said manual device (10) which controls the variable-flow valve (9) during a beverage delivery, storing said signals and optionally generating one or more position profiles (21).

10. Method according to one of claims 7 to 9, comprising the steps of detecting the pressure and/or flow rate values in the hydraulic circuit, generating a plurality of profiles (21) of pressure and/or flow rate.

11. Method according to claims 9 or 10, wherein at least one of said profiles (21) is displayed in a display (16).

12. Method according to one of claims 7 to 11, wherein said manually operated device comprises a lever (10) combined with a rheostat (14).

13. Method according to one of claims 7 to 12, wherein said image (17) and at least one of said profiles (21) are displayed on said display (16).

14. A storage device adapted to be read by a computer and/or control unit, said device comprising instructions that, once they have been read by a control unit of a machine according to one of claims from 1 to 6, make said machine carry out a method according to one of claims 7 to 13.

## Patentansprüche

1. Maschine (1) zur Zubereitung eines Getränks, umfassend eine Druckwasserversorgung (3), einen Boiler (4) zum Erhitzen des Wassers, eine Brüheinheit (6) mit einer Brühkammer (7), einen Hydraulikkreislauf (20a-20e), der die genannte Druckwasserversorgung mit dem genannten Boiler und der genannten Brüheinheit hydraulisch verbindet, und ferner umfassend eine Steuereinheit (8), die dazu ausgelegt ist, die Ausgabe des Getränks aus der Brühkammer zu steuern, die so ausgelegt ist, dass sie die Ausgabe des Getränks aus der Brühkammer steuert, **dadurch gekennzeichnet, dass** sie ferner ein Ventil (9) mit variabler Durchflussmenge und eine Ventilbetätigungs-einrichtung zum Betätigen des genannten Ventils umfasst, wobei das genannte Ventil in dem genannten Hydraulikkreislauf stromaufwärts von der Brühkammer (7) angeordnet ist, wobei die genannte Ventilbetätigungseinrichtung eine handbetätigbare Vorrichtung (10, 17) umfasst, wobei die genannte handbetätigbare Vorrichtung (10, 17) mit einer Vorrichtung (14, 16) verbunden ist, die dazu ausgelegt ist, die Position der handbetätigbaren Vorrichtung in Bezug auf eine Bahn (14, 18) zu erfassen und ein Signal, das die erfasste Position anzeigt, an die Steuereinheit (8) zu senden, **dadurch gekennzeichnet, dass** in der genannten handbetätigbaren Vorrichtung ein Bild (17) enthalten ist, das auf einer Touch-Vorrichtung (16) sichtbar ist, und das genannte Ventil (9) durch Ändern der Position des genannten Bildes (17) auf der Vorrichtung (16) betätigt wird.

2. Maschine nach Anspruch 1, wobei die Position des genannten Ventils (9) zwischen dem genannten Boiler (4) und der genannten Brühkammer (7) oder zwischen einer Pumpe (5) und dem genannten Boiler (4) wählbar ist.

3. Maschine nach Anspruch 1 oder 2, wobei das genannte Ventil (9) ein Proportional-Elektroventil ist.

4. Maschine nach einem der vorhergehenden Ansprüche, wobei die genannte handbetätigbare Vorrichtung einen Hebel (10) und die die Hebelposition erfassende Vorrichtung ein mit dem genannten Hebel kombiniertes Potentiometer (14) umfasst.

5. Maschine nach einem der vorhergehenden Ansprüche, die ferner mindestens einen Durchflusssensor (11) und/oder mindestens einen Drucksensor (12) umfasst, die so ausgelegt sind, dass sie einen Durchfluss- und/oder Druckwert erfassen.

6. Maschine nach einem der vorhergehenden Ansprüche, umfassend eine Speichereinheit (19) zum Speichern von mindestens einer Vielzahl von Daten, umfassend die Positionen der genannten handbetätigbaren Vorrichtung (10, 17), die Druckwerte im Hydraulikkreislauf, die Durchflusswerte im Hydraulikkreislauf oder eine Kombination davon, wobei die genannte Steuereinheit (8) vorzugsweise programmierbar ist, um mindestens ein Profil (21) der genannten Positionen zu erzeugen, und ein Display zum Anzeigen des Profils oder der Profile umfasst.

7. Verfahren zum Steuern der Ausgabe eines Getränks in einer Maschine (1) nach einem der vorhergehenden Ansprüche 1 bis 6, umfassend eine Druckwasserversorgung (3, 5), einen Boiler (4) zum Erhitzen des Wassers, eine Brühkammer (7), einen Hydraulikkreislauf (20a bis 20e, der die genannte Druckwasserversorgung, den genannten Boiler und die genannte Brüheinheit hydraulisch verbindet; eine Steuereinheit (8), die dazu ausgelegt ist, die Ausgabe des Getränks aus der genannten Brühkammer (7) zu steuern, ein Ventil (9) mit variabler Durchflussmenge und eine Ventilbetätigungseinrichtung zum Betätigen des genannten Ventils, wobei das genannte Ventil in der genannten Hydraulikleitung stromaufwärts der Brühkammer (7) angeordnet ist, wobei die genannte Ventilbetätigungseinrichtung eine handbetätigbare Vorrichtung (10, 17) umfasst, wobei das Verfahren das Steuern des der genannten Brühkammer (7) zugeführten Wassers durch ein Ventil (9) mit variabler Durchflussmenge umfasst, **gekennzeichnet durch** das Steuern des Öffnungsgrads des genannten Ventils (9) mit variabler Durchflussmenge durch mindestens eine handbetätigbare Vorrichtung (10, 17), um die Getränkedurchflussmenge im Ausgabeschritt zu ändern.

8. Verfahren nach Anspruch 7, das den Schritt des Erfassens einer Position der genannten handbetätigbaren Vorrichtung (10, 17) umfasst, und wobei die genannte Steuereinheit (8) mit dem Ventil (9) mit variablem Durchfluss verbunden ist und das genannte Ventil in Abhängigkeit von der erfassten Position der genannten Vorrichtung (10, 17) betätigt.

9. Verfahren nach Anspruch 7 oder 8 umfassend die folgenden Schritte: Erfassen einer Vielzahl von Positionen (10, 10a), die von der genannten handbetätigbaren Vorrichtung (10) eingenommen werden, die das Ventil (9) mit variablem Durchfluss während einer Getränkeausgabe steuert, Speichern der Signale und gegebenenfalls Erzeugen eines oder mehrerer Positionsprofile (21).

10. Verfahren nach einem der Ansprüche 7 bis 9, umfassend die Schritte des Erfassens von Druck- und/oder Durchflusswerten in dem Hydraulikkreislauf und des Erzeugens einer Vielzahl von Druck- und/oder Durchflussprofilen (21).

11. Verfahren nach einem der Ansprüche 9 oder 10, wobei wenigstens eines der genannten Profile (21) auf einem Display (16) angezeigt wird.

12. Verfahren gemäß einem der Ansprüche 7 bis 11, wobei die genannte handbetätigbare Vorrichtung einen Hebel (10) in Kombination mit einem Rheostat (14) umfasst.

13. Verfahren nach einem der Ansprüche 7 bis 12, wobei das genannte Bild (17) und wenigstens eines der genannten Profile (21) auf dem genannten Display (16) visualisiert werden.

14. Speichervorrichtung, die von einem Computer und/oder einer Steuereinheit gelesen werden kann, wobei die genannte Vorrichtung Anweisungen umfasst, die, wenn sie von einer Steuereinheit einer Maschine gemäß einem der Ansprüche 1 bis 6 gelesen werden, die genannte Maschine veranlassen, ein Verfahren gemäß einem der Ansprüche 7 bis 13 auszuführen.

## Revendications

1. Machine (1) pour la préparation d'une boisson, comprenant une alimentation en eau (3) sous pression (5), une chaudière (4) pour chauffer l'eau, une unité d'infusion (6) comprenant une chambre d'infusion (7), un circuit hydraulique (20a - 20e) reliant fluidiquement ladite alimentation en eau sous pression à ladite chaudière et à ladite unité d'infusion ; une unité de commande (8) adaptée pour commander la distribution de la boisson à partir de ladite chambre d'infusion, **caractérisée en ce qu'**elle comprend en outre une vanne à débit variable (9) et un organe d'entraînement de ladite vanne, ladite vanne étant positionnée sur ledit circuit hydraulique en amont de la chambre d'infusion (7), ledit organe d'entraînement de la vanne comprenant un dispositif à commande manuelle (10, 17), dans lequel ledit dispositif à commande manuelle (10, 17) est combiné à un dispositif (14, 16) adapté pour détecter la position du dispositif à commande manuelle par rapport à un trajet (14, 18) et pour envoyer un signal indiquant la position détectée à ladite unité de commande (8), **caractérisé en ce que** ledit dispositif à commande manuelle est une image (17) visible sur un dispositif tactile (16) et que ladite vanne (9) est actionnée en changeant la position de ladite image (17) sur le dispositif (16).

2. Machine selon la revendication 1, **caractérisée en ce que** la position de ladite vanne (9) est sélectionnée entre ladite chaudière (4) et ladite chambre d'infusion (7) ou entre une pompe (5) et ladite chaudière (4).

3. Machine selon la revendication 1 ou 2, **caractérisée en ce que** ladite vanne (9) est une électrovanne proportionnelle.

4. Machine selon l'une des revendications précédentes, **caractérisée en ce que** ledit dispositif à commande manuelle comprend un levier (10) et **en ce que** ledit dispositif de détection de la position du levier comprend un potentiomètre (14) combiné audit levier.

5. Machine selon l'une des revendications précédentes, comprenant en outre au moins un capteur de débit (11) et/ou au moins un capteur de pression (12), qui sont adaptés pour détecter une valeur de débit et/ou de pression.

6. Machine selon l'une des revendications précédentes, comprenant une unité de stockage (19) pour stocker au moins une pluralité de données choisies parmi : les positions dudit dispositif à commande manuelle (10, 17), les valeurs de pression dans le circuit hydraulique, les valeurs de débit dans le circuit hydraulique, ou une combinaison de celles-ci, de préférence ladite unité de commande (8) est programmable pour générer au moins un profil (21) desdites positions et comprend un écran pour afficher ledit (lesdits) profil(s).

7. Procédé de contrôle de la distribution d'une boisson dans une machine (1) selon l'une des revendications précédentes 1 à 6, comprenant une alimentation en eau sous pression (3, 5), une chaudière (4) pour chauffer l'eau, une chambre d'infusion (7), un circuit hydraulique (20a - 20e) reliant fluidiquement ladite alimentation en eau sous pression, ladite chaudière et ladite unité d'infusion ; une unité de commande (8) adaptée pour commander la distribution de la boisson à partir de ladite chambre d'infusion (7), une vanne à débit variable (9) et un organe d'entraînement de la vanne pour entraîner ladite vanne, ladite vanne étant positionnée sur ledit conduit hydraulique en amont de la chambre d'infusion (7), ledit organe d'entraînement de la vanne comprenant un dispositif à commande manuelle (10, 17), le procédé consistant à contrôler l'eau fournie à ladite chambre d'infusion (7) par une vanne à débit variable (9), **caractérisé par** le contrôle du degré d'ouverture de ladite vanne à débit variable (9) par l'intermédiaire d'au moins un dispositif à commande manuelle (10, 17) afin de modifier le débit de la boisson au cours de l'étape de distribution.

8. Procédé selon la revendication 7, comprenant l'étape de détection d'une position dudit dispositif à commande manuelle (10, 17) et dans lequel ladite unité de commande (8) est reliée à la vanne à débit variable (9) et actionne ladite vanne en fonction de la position détectée dudit dispositif (10, 17).

9. Procédé selon la revendication 7 ou 8, comprenant les étapes de détection d'une pluralité de positions (10, 10a) prises par ledit dispositif manuel (10) qui commande la vanne à débit variable (9) au cours d'une distribution de boisson, de stockage desdits signaux et, éventuellement, de génération d'un ou de plusieurs profils de position (21).

10. Procédé selon l'une des revendications 7 à 9, comprenant les étapes de détection des valeurs de pression et/ou de débit dans le circuit hydraulique, de génération d'une pluralité de profils (21) de pression et/ou de débit.

11. Procédé selon les revendications 9 ou 10, **caractérisé en ce qu'**au moins un desdits profils (21) est affiché sur un écran (16).

12. Procédé selon l'une des revendications 7 à 11, **caractérisé en ce que** le dispositif à commande manuelle comprend un levier (10) combiné à un rhéostat (14).

13. Procédé selon l'une des revendications 7 à 12, **caractérisé en ce que** ladite image (17) et au moins l'un desdits profils (21) sont affichés sur ledit écran (16).

14. Dispositif de stockage adapté pour être lu par un ordinateur et/ou une unité de commande, ledit dispositif comprenant des instructions qui, une fois lues par une unité de commande d'une machine selon l'une des revendications 1 à 6, font que ladite machine exécute un procédé selon l'une des revendications 7 à 13.
